# EUROPÄISCHE PATENTSCHRIFT

(11) **EP 0 260 477 B1**
(45) Veröffentlichungstag und Bekanntmachung des Hinweises auf die Patenterteilung: **17.03.1993**
(21) Anmeldenummer: 87112210.7
(22) Anmeldetag: 22.08.1987
(51) Int. Cl.: B23D 37/00

(54) **Senkrechträummaschine**
Vertical broaching machine
Machine à brochage verticale

(30) Priorität: 13.09.1986 DE 3631301
(43) Veröffentlichungstag der Anmeldung: 23.03.1988
(73) Patentinhaber: Kurt Hoffmann GmbH & Co.KG, D-75175 Pforzheim (DE)
(72) Erfinder: Wurst, Hermann, D-7541 Straubenhardt/Schwann (DE); Sailer, Hans, D-7530 Pforzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-C- 34 840
- FR-A- 2 358 951
- GB-A- 749 950
- US-A- 4 054 082

## Beschreibung

Die Erfindung betrifft eine Senkrechträummaschine, mit mindestens einem eine Zahnstange aufweisenden Werkzeugschlitten, der über ein Ritzel angetrieben, durch Führungsflächen geführt ist und über eine Werkzeugaufnahme Räumwerkzeuge trägt.

Neben hydraulischen Räummaschinen wurden auch schon mechanische Räummaschinen, insbesondere Senkrechträummaschinen in verschiedenen Ausführungen vorgeschlagen. Als Antriebselemente wurden Zahnstangen, Kugelgewindespindein und hydrostatische Spindelmuttern verwendet. Insbesondere bei einem Zahnstangenantrieb ergibt sich das Problem, daß aufgrund des funktionsnotwendigen Zahnspiels zwischen Zahnstange und Antriebsritzel die Schlittenlage nicht an jeder Stelle des Hubes exakt definiert ist. Zur Reduzierung des Spiels beim Betrieb wurde für eine Waagerecht-Außenräummaschine eine Schrägverzahnung vorgeschlagen, durch die trotz der üblichen Anordnung der Verzahnung hinter dem Führungsschlitten durch Zusammenwirken mehrerer Kräfte eine genaue Führung erreicht werden soll. Abgesehen davon, daß es hier in komplizierter Weise auf das Zusammenwirken mehrerer Kräfte ankommt, ist diese Ausgestaltung bei Senkrechträummaschinen nicht einsetzbar.

Darüberhinaus weisen Senkrechträummaschinen noch weitere Nachteile auf. Bei Senkrechträummaschinen wird in der Regel bei Bewegung von oben nach unten geräumt. Werden auf den Räumschlitten keine Räumkräfte ausgeübt, so liegt eine Zahnflanke der Zahnstange aufgrund des Eigengewichtes des Werkzeugschlittens an der in Räumrichtung liegenden hinteren, also oberen Flanke eines Zahns des Ritzels auf. Wird beim Räumen auf den Räumwerkzeugschlitten eine seinem Gewicht entgegenwirkende Räumkraft ausgeübt, so wird diese in der Regel größer als das Eigengewicht, so daß der Räumschlitten kurz anhält, bis das Flankenspiel zwischen Zahnstange und Ritzel ausgeglichen ist, danach wird der Räumschlitten über die Zahnstange mit Hilfe der in Räumrichtung voderen, also nach unten gerichtete Zahnflanke weiter bewegt. Gegen Ende der Räumbewegung reduziert sich die Räumkraft wieder, so daß bei Unterschreiten des Eigengewichts der Werkzeugschlitten wieder nach unten fällt und die in Räumrichtung hinten liegende Zahnflanke des Ritzels wieder zum Tragen kommt. Diese nachteilige Eigenschaften des Zahnstangenritzelantriebs haben bisher deren Einsatz bei Senkrechträummaschinen behindert, wenn auch Räummaschinen bekannt wurden, die diesen Nachteil in Kauf nahmen. Diese konnten allerdings keine hohe Arbeitsgenauigkeit erreichen.

Die FR-A-23 58 951 (DE-A-26 33 098) zeigt eine Waagerecht-Räummaschine, bei der die Anordnung des Antriebs sowie eine Schrägverzahnung zwischen Ritzel und Zahnstange des Räumschlittens derart vorgesehen sind, daß die Abdrängkräfte verstärkt werden. Diese Ausgestaltung mag bei Horizontal-Räummaschinen zu vertretbaren Ergebnissen führen, ist aber nicht allgemein einsetzbar.

Der Erfindung liegt die Aufgabe zugrunde, eine gattungsgemäße Räummaschine zu schaffen, bei der unter Vermeidung der vorgenannten Nachteile eine hohe Arbeitsgenauigkeit in einfacher Weise erreichbar ist.

Erfindungsgemäß wird die genannte Aufgabe bei einer Räummaschine der eingangs genannten Art dadurch gelöst, daß das Ritzel an einem den Räumwerkzeugen zugewandten Bereich des Werkzeugschlittens angreift und daß die Achse des Ritzels bei zueinander parallel ausgerichteten Führungsflächen zu diesen einen Winkel einschließt, der wesentlich von 90 Grad verschieden ist. Durch diese Ausgestaltung wird erreicht, daß die radialen Abdrängkräfte unmittelbar und direkt ohne Zuhilfenahme anderer Kräfte, gegen die dem Werkzeug zugewandten Führungsflächen gedrückt werden können. Insbesondere bei Außenräummaschinen heißt dies mit anderen Worten, daß die radiale Abdrängkraft aus der Verzahnung eine unmittelbar parallel zur Normalkomponente der Räumkraft bzw. zur Abdrängkraft der Schnittkraft gerichtete Komponente aufweist. Es wird hierbei ein Spiel senkrecht sowohl zur Räumrichtung als auch zur Abdrängkraft der schnittkraft ausgeschlossen. Durch diese Ausgestaltung drückt die radiale Abdrängkraft aus der Verzahnung den Werkzeugschlitten einerseits gegen die beiden vorne liegenden, zu den Werkzeugen hin gerichteten Führungsflächen und gleichzeitig gegen eine im Winkel zu diesen liegende hintere Führungsfläche einer Führungsleiste. Hierdurch erhält der Räumschlitten eine eindeutige Lage, was zu einer hohen Bearbeitungsgenauigkeit führt. Die Abdrängkraft des Antriebs wird also unmittelbar zur spielfreien Führung des Räumschlittens eingesetzt.

Die Achse des Ritzels bei zueinander parallel ausgerichteten Führungsflächen der Winkel zwischen Achse des Ritzels und Führungsflächen liegt vorteilhafterweise zwischen 30 und 60 Grad.

Die erfindungsgemäße Räummaschine kann als Einfach- oder Simplex-Räummaschine eingesetzt werden. Wenn sie dabei als Senkrechträummaschine eingesetzt wird, so kann dem Werkzeugschlitten ein diesen entlastendes Gegengewicht zugeordnet werden, das ihn zumindestens tendentiell nach oben zieht.

In bevorzugter Ausgestaltung ist vorgesehen, daß die Maschine als Duplex-Maschine eingesetzt wird, die zwei Werkzeugschlitten mit den entsprechenden Räumwerkzeugen aufweist, die einem die Werkstücke aufnehmenden Teiltisch zugeordnet sind. Insbesondere in diesem Fall sieht die Erfindung vor, daß der Winkel 45 Grad beträgt, wenn die Werkzeugschlitten unter einem rechten Winkel zueinander stehen. Es wird dann in der Regel ein Vierstationenteiltisch eingesetzt, der die Werkstücke von der einen Räumeinheit zur nächsten bewegt.

Um das Spiel zwischen Ritzel und Zahnstange weiter zu reduzieren, sieht eine Weiterbildung vor, daß ein Antrieb einschließlich des Ritzels um eine zur Antriebswelle des Ritzels parallele, ortsfeste Achse verschwenkbar angelenkt ist, wobei insbesondere eine um die Achse gelenkige Drehmomentstütze fest mit einem Gehäuse des Antriebs verbunden ist. Die Drehmomentstütze, die fest mit dem Getriebegehäuse verbunden ist, verhindert das Verdrehen des Antriebs um die Antriebswelle und bewirkt, daß die in der horizontalen Ebene einwirkende Reaktionskraft, insbesondere beim Starten der Bewegung auf die Antriebswelle wirkt und hierdurch das Ritzel gegen die Zahnstange des nach unten zu bewegenden Räumschlittens drückt. Hierdurch wird ein weiterer Beitrag zum Spielausgleich erreicht.

In bevorzugter Weiterbildung ist ein hydraulischer Spielausgleich vorgesehen, der einen in einer Doppelkammer beweglichen Kolben aufweist, wobei die Doppelkammer mit der Lagerung der Antriebswelle des Ritzels fest verbunden ist, so daß je nach Druckbeaufschlagung der Kammerteile der Doppelkammer das Antriebsritzel gegen eine der beiden Zahnstangen der Duplex-Maschine gedrückt werden kann und selbstverständlich gegen diejenige gedrückt wird, die gerade ihre Räumbewegung ausführt.

Auch hierdurch kann das Spiel reduziert werden.

Eine Weiterbildung der Erfindung sieht vor, daß die Werkzeugschlitten mit Stoßdämpfern versehen sind. Hierdurch kann die kinetische Energie der bewegten Massen aufgefangen und die Maschine sicher zum Stillstand gebracht werden, auch wenn Notausschaltungen der Steuerung, beispielsweise bei Netzausfall nicht mehr funktionieren. Bei einer Duplex-Maschine reicht es, die Stoßdämpfer nur am unteren Ende der beiden Werkzeugschlitten anzuordnen, während eine Simplex-Maschine vorzugsweise auch am oberen Ende Stoßdämpfer aufweist. Eine weitere Ausbildung sieht vor, daß die Werkzeugschlitten mit Stoßdämpfern zur Hubbegrenzung versehen sind, wobei insbesondere der Klemmkopf eine kegelförmige Spreizbuchse aufweist,die eine Spreizbuchse aufweist,die durch eine Andruckfeder angedrückt und die hydraulisch lüftbar ist. Eine derartige Ausgestaltung ist vorzugsweise bei einer Einständer-Maschine vorgesehen, um ein Herunterfallen des Werkzeugschlittens, beispielsweise bei Riemenbruch oder dergleichen zu verhindern. Statt der erläuterten Spreizbuchse können auch andere hydraulichse Dehnspann-Elemente eingesetzt werden.

Weitere Vorteile und Merkmale der Erfindung ergeben sich aus den Ansprüchen und aus der nachfolgenden Beschreibung, in der ein Ausführungsbeispiel der erfindungsgemäßen Räummaschine unter Bezugnahme auf die Zeichnung im einzelnen erläutert ist. Dabei zeigt:

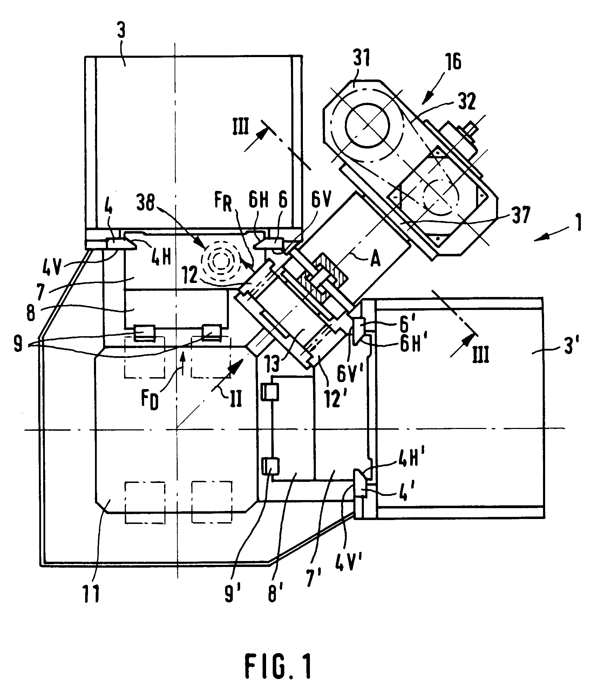

- Fig. 1: eine Aufsicht von oben auf das bevorzugte Ausführungsbeispiel der erfindungsgemäßen Räummaschine;
- Fig. 2: eine Sicht in Richtung des Pfeiles II auf Antriebsritzel und Werkzeugschlitten der erfindungsgemäßen Räummaschine;
- Fig. 3: einen Schnitt entlang III-III der Figur 1 mit Sicht auf die Antriebseinheit.

Die dargestellte bevorzugte Ausführungsform der erfindungsgemäßen Räummaschine 1 ist eine Duplex-Maschine mit zwei an einem Teiltisch wechselweise arbeitenden Räumwerkzeugen.

Demgemäß weist die erfindungsgemäße Räummaschine 1 zwei im dargestellten Ausführungsbeispiel unter einem Relativwinkel von 90 Grad zueinander angeordnete Maschinenständer 3, 3ʹ auf. Die Maschinenständer 3, 3ʹ sind mit Führungsleisten 4, 6 bzw. 4 ʹ, 6 ʹ versehen. Die Führungsleisten weisen vordere Führungsflächen 4 V, 4 Vʹ, 6 V, 6 Vʹ und hintere Führungsflächen 4 H, 6 H, 4 Hʹ, 6 Hʹ auf, wobei im dargestellten Ausführungsbeispiel die Flächen 6 H, 6 Hʹ im Gegensatz zu den anderen genannten Flächen keine wesentlichen Funktionen erfüllen. Die Flächennormalen der Führungsflächen weisen zumindestens eine Komponente parallel zur jeweils einwirkenden Abdrängkraft FD der beim Räumen entstehenden Zerspankraft - im dargestellten Ausführungsbeispiel - einer Außenräummaschine auf. Die vorderen Führungsflächen 4 V und 6 V bzw. 4 Vʹ und 6 Vʹ verlaufen im dargestellten Ausführungsbeispiel nicht nur in parallel zueinander liegenden Ebenen, sondern darüberhinaus in einer gemeinsamen Ebene. Entlang der Führungsleisten 4, 6 bzw. 4ʹ, 6ʹ wird jeweils ein Werkzeugschlitten 7 bzw. 7ʹ geführt, der eine Räumwerkzeug-Aufnahme 8, 8ʹ trägt, an der Räumwerkzeuge 9, 9ʹ befestigt sind. Im Winkel zwischen den Maschinenständern 3, 3ʹ ist ein Teiltisch 11 angeordnet, auf dem die zu räumenden Werkstücke anbringbar sind und durch Drehen von der Werkzeuggruppe 9 zur Werkzeuggruppe 9ʹ und gegebenenfalls zu weiteren Werkzeugen führbar sind.

Im Bereich der aufeinander zugerichteten Ecken der Werkzeugschlitten 7, 7ʹ haben diese jeweils eine Zahnstange 12, 12ʹ, die über eine gemeinsames stirnverzahntes Ritzel 13 mit einer Achse A angetrieben werden.

Das Ritzel 13 ist derart angeordnet und mit seiner Achse A derart ausgerichtet, daß es zumindestens direkt auf die vorderen Führungsflächen 4 V, 6 V, 4 Vʹ, 6 Vʹ drückt, seine Abdrängkraft im dargestellten Ausführungsbeispiel also eine zur Normalkomponente bzw. der Abdrängkraft der Räumkraft parallele gerichtete Komponente aufweist. Im dargestellten Ausführungsbeispiel drückt die radiale Abdrängkraft des Ritzels 13 darüberhinaus den Werkzeugschlitten 7, 7ʹ gegen die hinteren Führungsflächen 4 H und 4 Hʹ, da die radiale Abdrängkraft FR des Ritzels 13 ebenfalls eine Komponente parallel zur Führungsfläche 4 V bzw. 4 Vʹ aufweist. Das Ritzel 13 ist auf der der RäumwerkzeugAufnahme 8 bzw. 8ʹ und den Werkzeugaufnahmen 9 bzw. 9ʹ zugewandten Seite angeordnet und zwar unter einem Winkel von 45 Grad zu einer zu den vorderen Führungs flächen parallelen Ebene. Die 45 Grad-Anordnung ist bei einer Duplex-Maschine im rechten Winkel zueinander angeordneten Maschinenständern 3, 3ʹ die geeignete, insbesondere bei einer Simplex-Maschine könnte aber der genannte Relativwinkel zu einer Parallelebene zu den vorderen Führungsfällen in geeigneter Weise gewählt werden, soweit er sich hinreichend von 90 Grad zu diesen Führungsflächen unterscheidet. Das Ritzel ist regelmäßig nicht auf der den Räumwerkzeugen abgewandten Seite der Räumwerkzeuge und insbesondere an der diesen zugewandten Seite des Werkzeugschlittens angeordnet.

Das Ritzel 13 wird von einem Antrieb 16 über seine Antriebswelle 17 angetrieben. Das Ritzel 13 ist mit seinem Antrieb 16 schwenkbar um eine zu seiner Antriebswelle 17 parallele Achse 18 an einem ortsfesten Punkt gelagert.

Es ist ein hydraulischer Spielausgleich 19 vorgesehen, durch den das Ritzel je nachdem, welcher der Schlitten 7, 7ʹ einen Arbeitshub ausführt, gegen diesen gedrückt werden kann, wodurch das Flankenspiel ausgeglichen werden kann.

Die Werkzeugschlitten 7, 7ʹ haben weiterhin in ihrem unteren Bereich mechanische oder hydraulische Stoßdämpfer 21, die als mechanische Stoßdämpfer beispielsweise Reibungsfedern aufweisen können. Die Stoßdämpfer 21 fangen die kinetische Energie der bewegten Massen auf und bringen die Maschine daher sicher zum Stillstand in ihren Endstellungen. Bei einer Simplex- oder Einständer-Maschine mit also lediglich einem Werkzeugschlitten 7 sind an beiden Enden des Werkzeugschlittens entsprechende Stoßdämpfer 21 mit dazugehörigen Anschlägen vorgesehen.

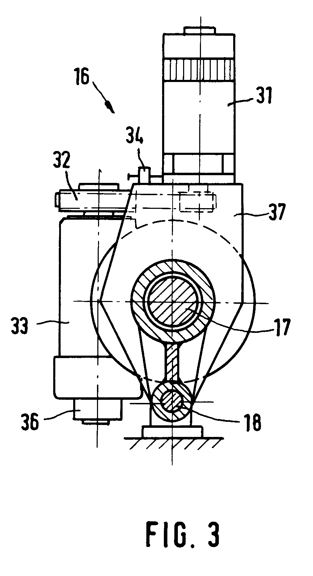

Der Antrieb 16 (Figur 3) der Räummaschine 1 weist einen Elektromotor 31 auf, der über einen Riemen 32 auf ein Schnecken-Aufsteckgetriebe 33 wirkt, welches die Antriebswelle 17 des Ritzels 13 angreift. Zum Spannen des Riemens 32 zwischen Gleichstrommotor 31 und Schnecken-Aufsetzgetriebe 33, ist eine Riemenspanneinrichtung 34 vorgesehen. Der gesamte Antrieb 16 bzw. dessen Gehäuse ist fest mit einer Drehmomentstütze 37 verbunden, die ebenso wie die Lagerungen der Antriebswelle schwenkbar um eine ortsfeste Achse 18 angelenkt ist. Die Reaktionskraft des Antriebs 16 in der horizontalen Ebene wirkt, insbesondere in der Startphase,derart auf die Antriebswelle 17, daß sie das Ritzel gegen die Zahnstange des nach unten zu bewegenden, d.h. seine Räumfunktion ausübenden Räumschlittens drückt.

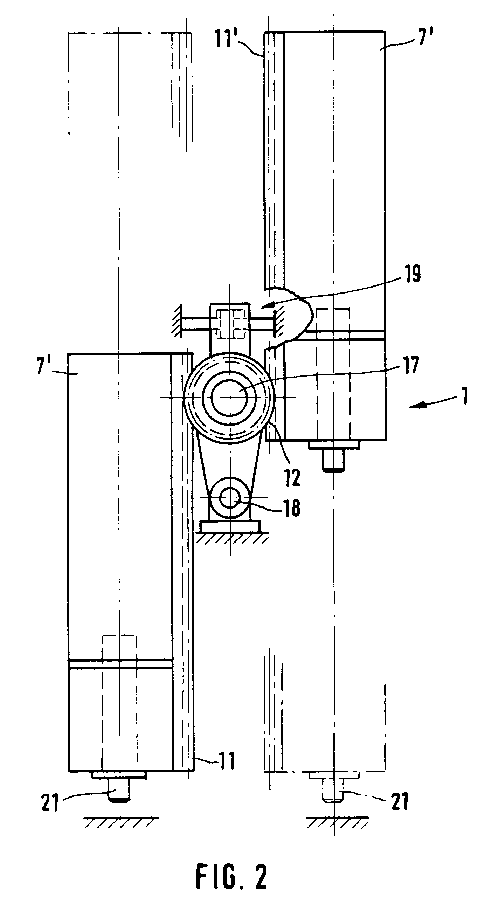

Wie insbesondere der Figur 2 zu entnehmen ist, arbeitet die dargestellte Duplex-Maschine derart, daß beispielsweise ausgehend von der Figur 2 zunächst der Antrieb derart geschaltet ist, daß der rechte Werkzeugschlitten 7ʹ nach unten bewegt wird und dabei mittels seines Räumwerkzeugs 9ʹ ein Werkstück bearbeitet. Hierbei ist der hydraulische Spielausgleich 19 in der in Figur 2 gezeigten Stellung und drückt das Ritzel 13 hydraulisch gegen die Zahnstange 12ʹ am Werkzeugschlitten 7ʹ, um so hier das Spiel möglichst zu reduzieren. Gleichzeitig wird zwangsläufig der Werkzeugschlitten 7 aus der in Figur 2 gezeigten Stellung über seine Zahnstange 12 nach oben bewegt.

Anschließend wird die Drehrichtung des Ritzels 13 umgekehrt und der Werkzeugschlitten 7 führt seine nach unten gerichtete Räumbewegung aus, während der Werkzeugschlitten 7 ʹ in seine in Figur 2 dargestellte Ausgangsstellung zurückgebracht wird. Bei dieser Bewegung ist selbstverständlich der hydraulische Spielausgleich 19 in seine andere Endstellung gebracht, bei der das Ritzel 13 gegen die Zahnstange 12 des Werkzeugschlittens 7, als in der Figur 2 nach links gedrückt wird.

Die Vorrichtung weist weiter einer Klemmeinrichtung 38 mit Klemmkopf, mit Spreizbuchse auf, die durch eine Feder angedrücket wird und hydraulisch lüftbar ist.

## Patentansprüche

1. Senkrechträummaschine, mit mindestens einem eine Zahnstange aufweisenden Werkzeugschlitten, der über ein Ritzel angetrieben, durch Führungsflächen geführt ist und über eine Werkzeugaufnahme Räumwerkzeuge trägt, dadurch gekennzeichnet, daß das Ritzel (13) an einem den Räumwerkzeugen (9, 9') zugewandten Bereich des Werkzeugschlittens (7, 7') angreift und daß die Achse (A) des Ritzels (13) bei zueinander parallel ausgerichteten Führungsflächen (4 V, 6 V; 4 V', 6 V') zu diesen einen Winkel einschließt, der wesentlich von 90 Grad verschieden ist.

2. Senkrechträummaschine nach Anspruch 1, dadurch gekennzeichnet, daß der Winkel zwischen 30 und 60 Grad liegt.

3. Senkrechträummaschine nach Anspruch 2, dadurch gekennzeichnet, daß der Winkel 45 Grad beträgt.

4. Senkrechträummaschine nach einem der vorangehenden Ansprüche, dadurch gekennzeichnet, daß ein Antrieb (16) einschließlich des Ritzels (13) um eine zur Antriebswelle (17) des Ritzels (13) parallele, ortsfeste Achse verschwenkbar angelenkt ist.

5. Senkrechträummaschine nach Anspruch 4, dadurch gekennzeichnet, daß das Ritzel (13) durch einen beidseitig hydraulisch beaufschlagten Zylinder verstellbar ist.

6. Senkrechträummaschine nach Anspruch 4 oder 5, dadurch gekennzeichnet, daß eine um die Achse (18) gelenkige Drehmomentstütze (37) fest mit einem Gehäuse des Antriebs verbunden ist.

7. Senkrechträummaschine nach einem der vorangehenden Ansprüche, dadurch gekennzeichnet, daß die Werkzeugschlitten mit Stoßdämpfern zur Hubbegrenzung versehen sind.

8. Senkrechträummaschine nach einem der vorangehenden Ansprüche, dadurch gekennzeichnet, daß durch den Werkzeugschlitten (7) eine vorzugsweise runde Stange geführt ist, an der der Werkzeugschlitten (7) mit einem Klemmkopf festlegbar ist.

9. Senkrechträummaschine nach Anspruch 7, dadurch gekennzeichnet, daß der Klemmkopf eine kegelförmige Spreizbuchse aufweist, die durch eine Andruckfeder angedrückt und die hydraulisch lüftbar ist.

10. Senkrechträummaschine nach einem der vorangehenden Ansprüche, dadurch gekennzeichnet, daß ein Antrieb (16) mit einem Ritzel (13) zwei Werkzeugschlitten zugeordnet sind.

## Claims

1. Vertical broaching machine with at least one tool slide having a rack, which, driven by a pinion, is guided by guide surfaces and by means of a tool receptacle carries broaches, characterized in that the pinion (13) engages on an area of the tool slide (7, 7') facing the broaches (9, 9') and that the axis (A) of the pinion (13) in the case of parallel-oriented guide surfaces (4 V, 6 V; 4 V', 6 V') forms an angle thereto, which differs significantly from 90°.

2. Vertical broaching machine according to claim 1, characterized in that the angle is between 30 and 60°.

3. Vertical broaching machine according to claim 2, characterized in that the angle is 45°.

4. Vertical broaching machine according to one of the preceding claims, characterized in that a drive (16), including the pinion (13), is pivotably articulated about a feed spindle parallel to the driving shaft (17) of the pinion (13).

5. Vertical broaching machine according to claim 4, characterized in that the pinion (13) is adjustable by a cylinder on which there is a hydraulic action on both sides.

6. Vertical broaching machine according to claims 4 or 5, characterized in that a torque support (37) articulated about the spindle (18) is fixed to a casing of the drive.

7. Vertical broaching machine according to one of the preceding claims, characterized in that the tool slides are provided with travel limiting shock absorbers.

8. Vertical broaching machine according to one of the preceding claims, characterized in that a preferably round rod on which the tool slide (7) is fixable with a clamping head is guided by the tool slide (7).

9. Vertical broaching machine according to claim 7, characterized in that the clamping head has a conical expanding bushing, which is pressed by a pressure spring and which is hydraulically raisable.

10. Vertical broaching machine according to one of the preceding claims, characterized in that a drive (16) with a pinion (13) are associated with two tool slides.

## Revendications

1. Machine à brocher verticale, comprenant au moins un chariot porte-outil muni d'une crémaillère, lequel est entraîné par l'intermédiaire d'un pignon, guidé par des surfaces de guidage et porte, par l'intermédiaire d'un logement d'outil, des outils à brocher, **caractérisée en ce** que le pignon (13) attaque dans une région du chariot porteoutil (7, 7') dirigée vers les outils de brochage (9, 9'), et que l'axe (A) du pignon (13) forme avec des surfaces de guidage parallèles (4V, 6V, 4V', 6V') un angle qui diffère sensiblement de 90 degrés.

2. Machine à brocher verticale selon la revendication 1, caractérisée en ce que l'angle est compris entre 30 et 60 degrés.

3. Machine à brocher verticale selon la revendication 2, caractérisée en ce que l'angle est de 45 degrés.

4. Machine à brocher verticale selon l'une des revendications précédentes, caractérisée en ce qu'un mécanisme d'entraînement (16), y compris le pignon (13), est monté de façon à pouvoir pivoter autour d'un axe fixe orienté parallélement à l'arbre moteur (17) du pignon (13).

5. Machine à brocher verticale selon la revendication 4, caractérisée en ce que le pignon (13) peut être déplacé au moyen d'un vérin hydraulique sollicité dans les deux sens.

6. Machine à brocher verticale selon l'une des revendications 4 ou 5, caractérisée en ce qu'un support de couple (37) articulé autour de l'axe (18) est solidarisé avec un carter du mécanisme d'entraînement.

7. Machine à brocher verticale selon l'une des revendications précédentes, caractérisée en ce que les chariots porte-outil sont munis d'amortisseurs pour la limitation de la course.

8. Machine à brocher verticale selon l'une des revendications précédentes, caractérisée en ce que le chariot porte-outil (7) est traversé par une barre, de préférence ronde, sur laquelle le chariot porte-outil (7) peut être bloqué au moyen d'une tête de serrage.

9. Machine à brocher verticale selon la revendication 7, caractérisée en ce que la tête de serrage comprend une douille à expansion conique qui peut être appliquée par un ressort de pression et débloquée hydrauliquement.

10. Machine à brocher verticale selon l'une des revendications précédentes, caractérisée en ce qu'un mécanisme d'entraînement (16) avec un pignon (13) est associé à deux chariots porte-outil.
